# EUROPÄISCHE PATENTSCHRIFT

(11) **EP 4 204 706 B1**
(45) Veröffentlichungstag und Bekanntmachung des Hinweises auf die Patenterteilung: **11.09.2024**
(21) Anmeldenummer: 21742410.0
(22) Anmeldetag: 13.07.2021
(51) Int. Cl.: F16D 51/28, B60B 33/00

(54) **ROLLENEINHEIT FÜR EIN FAHRZEUG UND FAHRZEUG**
ROLLER UNIT FOR A VEHICLE, AND VEHICLE
UNITÉ DE ROULEAU POUR UN VÉHICULE ET VÉHICULE

(30) Priorität: 28.08.2020 DE 102020005296
(43) Veröffentlichungstag der Anmeldung: 05.07.2023
(73) Patentinhaber: SEW-EURODRIVE GmbH & Co. KG, 76646 Bruchsal (DE)
(72) Erfinder: DAHL, Theodor, 76646 Bruchsal (DE)
(86) Internationale Anmeldenummer: PCT/EP2021/069516
(87) Internationale Veröffentlichungsnummer: WO 2022/042930

(56) Entgegenhaltungen:
- EP-A1- 3 056 755
- DE-A1- 2 516 468
- DE-U1- 202014 003 033
- US-A- 4 157 747

## Beschreibung

Die Erfindung betrifft eine Rolleneinheit für ein Fahrzeug, umfassend einen Haltekörper, mindestens ein um eine Drehachse relativ zu dem Haltekörper drehbares Rad und mindestens eine Bremseinheit zum Bremsen des mindestens einen Rades, wobei die Bremseinheit ein Paar von Bremsbacken aufweist, welche zur Erzeugung eines Bremsmoments jeweils um einen Bolzen relativ zu dem Haltekörper schwenkbar sind. Die Erfindung betrifft auch Fahrzeug, insbesondere ein autonom fahrendes Fahrzeug, welches mindestens eine erfindungsgemäße Rolleneinheit umfasst.

Zum Bremsen von Rädern von Fahrzeugen sind Bremsen bekannt, mittels welchen Bremsmomente erzeugbar sind. Insbesondere sind Trommelbremsen bekannt, welche zwei Bremsbacken aufweisen, die zur Erzeugung eines Bremsmoments in Kontakt mit einer Bremsfläche gebracht werden. Die Bremsfläche ist dabei eine nach innen gerichtete Oberfläche eines hohlzylindrischen Körpers und dreht mit dem zu bremsenden Rad mit. Je nach Anordnung und Schwenkrichtung der Bremsbacken laufen diese bei der Erzeugung des Bremsmoments an der Bremsfläche auf oder ab. Mit auflaufenden Bremsbacken ist ein größeres Bremsmoment erzielbar als mit ablaufenden Bremsbacken.

Aus der DE 20 2014 003 033 U1 ist eine Rolle bekannt, welche eine Trommelbremse mit zwei Bremsbacken umfasst. Mittels eines Bremshebels sind die Bremsbacken in Kontakt mit einer Bremsfläche bringbar.

Aus der DE 16 75 142 A ist eine Trommelbremse mit mehreren Bremsschuhpaaren bekannt. Die Bremsschuhe sind dabei zur Erzeugung eines Bremsmoments jeweils um einen Bolzen schwenkbar.

Aus der EP 0 202 541 B1 ist eine Trommelbremse mit drei Bremsbacken bekannt. Dabei sind zwei Bremsbacken in Vorwärtsfahrtrichtung ablaufend gelagert, und in Rückwärtsfahrtrichtung ist ein Bremsbacken auflaufend und ein Bremsbacken ablaufend gelagert.

Der Erfindung liegt die Aufgabe zugrunde, eine Rolleneinheit für ein Fahrzeug sowie ein Fahrzeug, insbesondere ein autonom fahrendes Fahrzeug, weiterzubilden.

Die Aufgabe wird durch eine Rolleneinheit mit den im Anspruch 1 angegebenen Merkmalen gelöst. Vorteilhafte Ausgestaltungen und Weiterbildungen sind Gegenstand der Unteransprüche. Die Aufgabe wird auch durch ein Fahrzeug mit den im Anspruch 13 angegebenen Merkmalen gelöst. Vorteilhafte Ausgestaltungen und Weiterbildungen sind Gegenstand der Unteransprüche.

Eine erfindungsgemäße Rolleneinheit für ein Fahrzeug umfasst einen Haltekörper, mindestens ein um eine Drehachse relativ zu dem Haltekörper drehbares Rad und mindestens eine Bremseinheit zum Bremsen des mindestens einen Rades. Dabei weist die Bremseinheit ein Paar von Bremsbacken auf, welche zur Erzeugung eines Bremsmoments jeweils um einen Bolzen relativ zu dem Haltekörper schwenkbar sind. Der Haltekörper weist ein Paar von ersten Bohrungen zur Aufnahme der Bolzen auf. Der Haltekörper weist auch ein Paar von zweiten Bohrungen zur Aufnahme der Bolzen auf.

Eine erfindungsgemäße Rolleneinheit ist, je nach gewünschtem Bremsmoment, flexibel in verschiedenen Varianten konfigurierbar. Die wesentlichen Bauteile sind, wie bei einem Baukasten, bei allen Varianten identisch. Dadurch ist nur eine verhältnismäßig geringe Varianz an Bauteilen erforderlich, wodurch die Herstellung der verschiedenen Varianten kostengünstig ist. Insbesondere sind eine Schnittstelle zur Montage an einem Fahrzeug sowie ein benötigter Bauraum und eine Traglast bei jeder Variante gleich. Auch die Ansteuerung der Bremseinheit erfolgt bei allen Varianten mit einem gleichen Aktor mit einer gleichen Betätigungskraft. Die verschiedenen Varianten entstehen einfach durch wahlweises Einsetzen der Bolzen in die ersten Bohrungen oder in die zweiten Bohrungen. Gegebenenfalls sind verschiedenartige Bremsbacken einsetzbar. Die Bremskraft ist ebenfalls über verschiedene Systemfedern einstellbar, somit sind verschiedene Anhaltecharakteristiken abbildbar.

Vorteilhaft sind die ersten Bohrungen und die zweiten Bohrungen derart angeordnet, dass bei einer Drehung des mindestens einen Rades in eine Vorzugsrichtung bei in den ersten Bohrungen aufgenommenen Bolzen mittels der Bremsbacken ein erstes Bremsmoment erzeugbar ist, und bei in den zweiten Bohrungen aufgenommenen Bolzen mittels der Bremsbacken ein zweites Bremsmoment erzeugbar ist. Dabei ist das erste Bremsmoment größer als das zweite Bremsmoment. Damit ist das von der Bremseinheit erzeugte Bremsmoment flexibel anpassbar. Wenn ein großes Bremsmoment erforderlich ist, sind die Bolzen in die ersten Bohrungen einzusetzen. Wenn ein kleineres Bremsmoment erforderlich ist, sind die Bolzen in die zweiten Bohrungen einzusetzen. Gegebenenfalls sind auch passende Bremsbacken zu wählen.

Gemäß einer vorteilhaften Ausgestaltung der Erfindung sind die ersten Bohrungen derart angeordnet, dass bei einer Drehung des mindestens einen Rades in die Vorzugsrichtung bei in den ersten Bohrungen aufgenommenen Bolzen die Bremsbacken bei Erzeugung des ersten Bremsmoments an einer mit dem Rad drehenden Bremsfläche auflaufen. Das erste Bremsmoment ist somit durch auflaufende Bremsbacken erzeugbar. Durch auflaufende Bremsbacken ist ein verhältnismäßig großes Bremsmoment erzeugbar.

Gemäß einer vorteilhaften Ausgestaltung der Erfindung sind die zweiten Bohrungen derart angeordnet, dass bei einer Drehung des mindestens einen Rades in die Vorzugsrichtung bei in den zweiten Bohrungen aufgenommenen Bolzen die Bremsbacken bei Erzeugung des zweiten Bremsmoments an einer mit dem Rad drehenden Bremsfläche ablaufen. Das zweite Bremsmoment ist somit durch ablaufende Bremsbacken erzeugbar. Durch ablaufende Bremsbacken ist bei gleicher Betätigungskraft ein, im Vergleich zu auflaufenden Bremsbacken, kleineres Bremsmoment erzeugbar.

Gemäß einer bevorzugten Ausgestaltung der Erfindung sind die ersten Bohrungen diametral gegenüberliegend bezüglich der Drehachse angeordnet, und die zweiten Bohrungen sind diametral gegenüberliegend bezüglich der Drehachse angeordnet. Somit greift in jeder Variante der Rolleneinheit das erzeugte Bremsmoment symmetrisch an einer Bremsfläche des Rades an.

Gemäß einer vorteilhaften Ausgestaltung der Erfindung sind die ersten Bohrungen bezüglich der Drehachse in Umfangsrichtung versetzt zu den zweiten Bohrungen angeordnet. Damit ist die Montage bei allen Varianten der Rolleneinheit ähnlich.

Vorzugsweise weisen die ersten Bohrungen und die zweiten Bohrungen in radialer Richtung einen gleichen Abstand zu der Drehachse auf. Somit ist der erforderliche Bauraum bei allen Varianten der Rolleneinheit identisch.

Gemäß einer vorteilhaften Weiterbildung der Erfindung weist die Bremseinheit eine Betätigungseinheit auf, mittels welcher die Bremsbacken zur Erzeugung eines Bremsmoments um die Bolzen relativ zu dem Haltekörper derart schwenkbar sind, dass die Bremsbacken mit einer mit dem Rad drehenden Bremsfläche in Kontakt kommen. Die Bremseinheit wirkt somit in Form einer Trommelbremse.

Vorzugsweise umfasst die Betätigungseinheit dabei eine Nockenscheibe, welche um die Drehachse drehbar ist, und welche zwei radial nach außen ragende Nocken aufweist.

Gemäß einer vorteilhaften Weiterbildung der Erfindung weist die Bremseinheit eine Rückstelleinheit auf, welche die Bremsbacken derart um die Bolzen relativ zu dem Haltekörper schwenkt, dass die Bremsbacken außer Kontakt mit der mit dem Rad drehenden Bremsfläche kommen. Die Rückstelleinheit wirkt dabei selbsttätig auf die Bremsbacken. Eine aktive Rückstellung der Bremsbacken ist somit nicht erforderlich.

Vorzugsweise umfasst die Rückstelleinheit dabei zwei Rückstellfedern, welche als Zugfedern ausgestaltet sind.

Gemäß einer bevorzugten Ausgestaltung der Erfindung weist die Rolleneinheit einen Montagekörper auf, welcher um eine Schwenkachse relativ zu dem Haltekörper schwenkbar ist. Wenn die Rolleneinheit mit dem Montagekörper an einem Fahrzeug befestigt ist, so richtet sich der Haltekörper mit dem Rad unabhängig von einer Fahrtrichtung des Fahrzeugs stets derart aus, dass das Rad nachläuft. Unabhängig von der Fahrtrichtung dreht somit das Rad immer in die gleiche Vorzugsrichtung. Die Größe des Bremsmomentes ist unter anderem von der Laufrichtung des Rades abhängig. Wenn das Rad immer in die gleiche Vorzugsrichtung dreht, so ist das erzeugte Bremsmoment von der Fahrtrichtung unabhängig.

Ein erfindungsgemäßes Fahrzeug, insbesondere ein autonom fahrendes Fahrzeug, umfasst einen Fahrzeugrahmen und mindestens eine erfindungsgemäße Rolleneinheit. Bei einem Fahrzeug, welches einen verhältnismäßig hohen Schwerpunkt aufweist, kann eine Bremsung mit einem zu großen Bremsmoment zu einem Umkippen des Fahrzeugs führen. Bei einem Fahrzeug, welches einen verhältnismäßig niedrigen Schwerpunkt aufweist, besteht keine Gefahr des Umkippens. Durch entsprechende Einstellung der Rolleneinheit ist dabei mit geringem Aufwand für ein Fahrzeug mit hohem Schwerpunkt das kleinere zweite Bremsmoment wählbar. Ebenso ist mit geringem Aufwand für ein Fahrzeug mit niedrigem Schwerpunkt das größere erste Bremsmoment wählbar.

Gemäß einer bevorzugten Ausgestaltung der Erfindung ist die mindestens eine Rolleneinheit derart an dem Fahrzeugrahmen angeordnet, dass der Haltekörper um eine in Vertikalrichtung verlaufende Schwenkachse relativ zu dem Fahrzeugrahmen schwenkbar ist. Der Montagekörper ist dabei an dem Fahrzeug befestigt. Der Haltekörper mit dem Rad richtet sich unabhängig von einer Fahrtrichtung des Fahrzeugs stets derart aus, dass das Rad nachläuft. Unabhängig von der Fahrtrichtung dreht somit das Rad immer in die gleiche Vorzugsrichtung. Die Größe des Bremsmomentes ist unter anderem von der Laufrichtung des Rades abhängig. Wenn das Rad immer in die gleiche Vorzugsrichtung dreht, so ist das erzeugte Bremsmoment von der Fahrtrichtung unabhängig.

Die Erfindung ist nur durch den Umfang der beigefügten Ansprüche beschränkt.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine schematische Seitenansicht eines autonom fahrenden Fahrzeugs,
- Figur 2:: einen Schnitt durch eine Rolleneinheit in einer ersten Variante mit inaktiver Bremseinheit,
- Figur 3:: einen Schnitt durch die Rolleneinheit in der ersten Variante mit aktivierter Bremseinheit,
- Figur 4:: einen Schnitt durch eine Rolleneinheit in einer zweiten Variante mit inaktiver Bremseinheit und
- Figur 5:: einen Schnitt durch die Rolleneinheit in der zweiten Variante mit aktivierter Bremseinheit.

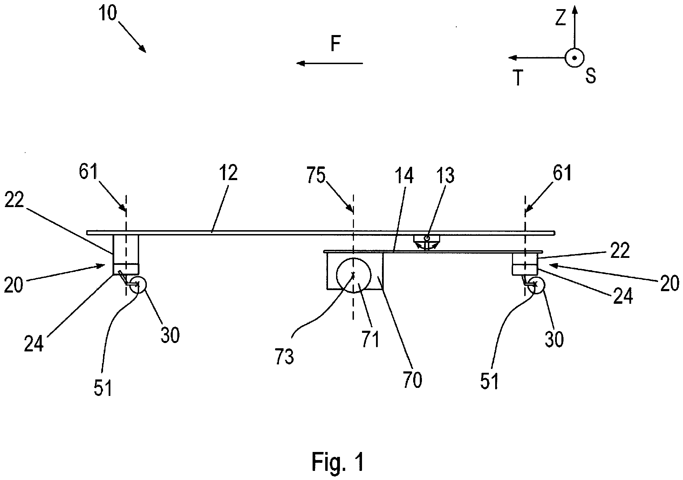

Figur 1 zeigt eine schematische Seitenansicht eines Fahrzeugs 10. Das Fahrzeug 10 dient vorliegend zum Transport von Gegenständen in einer technischen Anlage. Bei der technischen Anlage handelt es sich um eine industrielle Anwendung, beispielsweise ein Produktionswerk. Das Fahrzeug 10 dient beispielsweise auch zur Lieferung von Waren zu einem Wohnhaus eines privaten Empfängers in einer Stadt oder in einem Wohngebiet. Bei dem Fahrzeug 10 handelt es sich vorliegend um ein autonom fahrendes Fahrzeug. In der hier gezeigten Darstellung befindet sich das Fahrzeug 10 auf einem ebenen Boden.

Das Fahrzeug 10 umfasst einen Fahrzeugrahmen 12 und einen Pendelrahmen 14. Der Pendelrahmen 14 ist um eine Pendelachse 13 relativ zu dem Fahrzeugrahmen 12 schwenkbar. Die Pendelachse 13 verläuft in Seitenrichtung S. Der Fahrzeugrahmen 12 weist einen annähernd rechteckförmigen Querschnitt auf und erstreckt sich vorwiegend in eine Grundrichtung T und in die Seitenrichtung S.

Die Grundrichtung T entspricht zumindest annähernd der gewöhnlichen Fahrtrichtung F des Fahrzeugs 10. Die Seitenrichtung S verläuft rechtwinklig zu der Grundrichtung T. Die Grundrichtung T und die Seitenrichtung S stellen horizontale Richtungen dar und verlaufen parallel zu dem ebenen Boden, auf welchem sich das Fahrzeug 10 befindet. Eine Vertikalrichtung Z steht senkrecht auf dem ebenen Boden und verläuft somit rechtwinklig zu der Grundrichtung T und rechtwinklig zu der Seitenrichtung S. Jede Richtung rechtwinklig zu der Vertikalrichtung Z stellt eine horizontale Richtung dar.

Das Fahrzeug 10 umfasst vorliegend vier Rolleneinheiten 20. An dem Fahrzeugrahmen 12 sind zwei Rolleneinheiten 20 in Seitenrichtung S versetzt zueinander angeordnet, wobei in der hier gezeigten Darstellung eine der besagten Rolleneinheiten 20 verdeckt ist. An dem Pendelrahmen 14 sind zwei weitere Rolleneinheiten 20 in Seitenrichtung S versetzt zueinander angeordnet, wobei in der hier gezeigten Darstellung eine der besagten Rolleneinheiten 20 verdeckt ist.

Die Rolleneinheiten 20 umfassen jeweils einen Montagekörper 22, einen Haltekörper 24 und mindestens ein Rad 30. Die Montagekörper 22 der Rolleneinheiten 20 sind an dem Fahrzeugrahmen 12 sowie an dem Pendelrahmen 14 befestigt. Die Haltekörper 24 und die Räder 30 sind dabei jeweils um eine Schwenkachse 61 relativ zu den Montagekörpern 22 schwenkbar. Die Schwenkachsen 61 verlaufen, zumindest annähernd, in Vertikalrichtung Z. Die Haltekörper 24 der Rolleneinheiten 20 sind somit jeweils um eine in Vertikalrichtung Z verlaufende Schwenkachse 61 relativ zu dem Fahrzeugrahmen 12 sowie relativ zu dem Pendelrahmen 14 schwenkbar.

Die Räder 30 der Rolleneinheiten 20 sind jeweils um eine in eine horizontale Richtung verlaufende Drehachse 51 relativ zu dem Haltekörper 24 drehbar. In der hier gezeigten Darstellung verlaufen die Drehachsen 51 in Seitenrichtung S. In Abhängigkeit von einer Schwenkung der Haltekörper 24 um die Schwenkachsen 61 verlaufen die Drehachsen 51 beispielsweise in Grundrichtung T oder in eine andere horizontale Richtung. Die Schwenkachse 61 und die Drehachse 51 einer Rolleneinheiten 20 schneiden sich vorliegend nicht.

Es ist denkbar, dass die Rolleneinheiten 20 jeweils zwei Räder 30 aufweisen. Die beiden Räder 30 einer Rolleneinheit 20 sind in diesem Fall um die gleiche Drehachse 51 drehbar und sind in Richtung der Drehachse 51 versetzt zueinander angeordnet.

Das Fahrzeug 10 umfasst eine Antriebseinheit 70, die an dem Pendelrahmen 14 angeordnet ist. Die Antriebseinheit 70 umfasst zwei Antriebsräder 71, welche um eine Antriebsachse 73 drehbar gelagert sind. In der hier gezeigten Darstellung ist eines der Antriebsräder 71 verdeckt.

Die Antriebseinheit 70 ist um eine Lenkachse 75 relativ zu dem Pendelrahmen 14 schwenkbar. In der hier gezeigten Darstellung verläuft die Antriebsachse 73 in Seitenrichtung S. In Abhängigkeit von einer Schwenkung der Antriebseinheit 70 um die Lenkachse 75 verläuft die Drehachse 51 beispielsweise in Grundrichtung T oder in eine andere horizontale Richtung.

Die Rolleneinheiten 20 umfassen jeweils eine Bremseinheit zum Bremsen der Räder 30. Die Räder 30 sind annähernd hohlzylindrisch ausgebildet und weisen jeweils eine radial nach außen gerichtete Lauffläche auf, welche in Kontakt mit dem Boden steht. Die Räder 30 weisen ferner jeweils eine radial nach innen gerichtete Bremsfläche auf, welche mit der Bremseinheit zum Bremsen der Räder 30 zusammenwirkt.

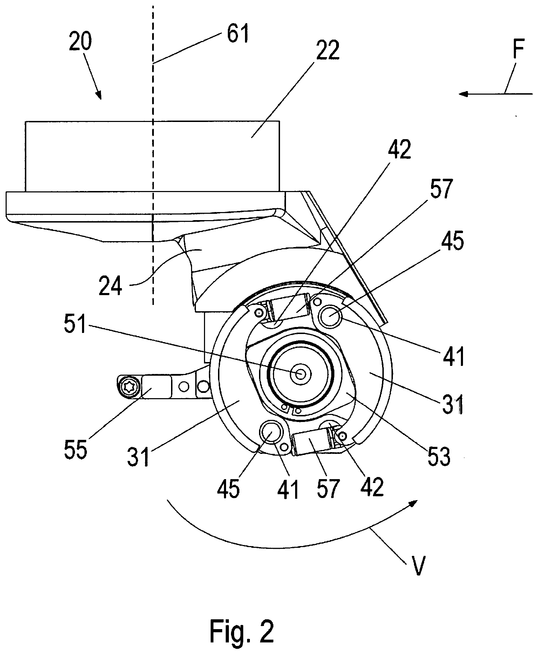

Figur 2 zeigt einen Schnitt durch eine Rolleneinheit 20 in einer ersten Variante mit inaktiver Bremseinheit. Wie bereits erwähnt umfasst die Rolleneinheit 20 einen Montagekörper 22, einen Haltekörper 24 und mindestens ein Rad 30. Das Rad ist um eine Drehachse 51 relativ zu dem Haltekörper 24 drehbar. Das Rad 30 ist hier nicht dargestellt. Der Montagekörper 22 ist relativ zu dem Haltekörper 24 und zu dem Rad 30 um eine Schwenkachse 61 schwenkbar. Die Schwenkachse 61 verläuft rechtwinklig zu der Drehachse 51. Die Rolleneinheit 20 wird in eine Fahrtrichtung F bewegt. Dabei dreht sich das Rad 30 in eine Vorzugsrichtung V um die Drehachse 51.

Die Rolleneinheit 20 umfasst eine Bremseinheit zum Bremsen des Rades 30. Der Haltekörper 24 weist dazu ein Paar von ersten Bohrungen 41 zur Aufnahme von Bolzen 45 und ein Paar von zweiten Bohrungen 42 zur Aufnahme von Bolzen 45 auf. Die Bohrungen 41, 42 verlaufen parallel zu der Drehachse 51. Die Bolzen 45 sind kreiszylindrisch ausgebildet. Eine Mittelachse eines Bolzens 45, der in einer der Bohrungen 41, 42 aufgenommen ist, verläuft somit ebenfalls parallel zu der Drehachse 51. Die Bohrungen 41, 42 und die Bolzen 45 sind Bestandteile der Bremseinheit.

Die ersten Bohrungen 41 sind diametral gegenüberliegend bezüglich der Drehachse 51 angeordnet. Auch die zweiten Bohrungen 42 sind diametral gegenüberliegend bezüglich der Drehachse 51 angeordnet. Die ersten Bohrungen 41 und die zweiten Bohrungen 42weisen in radialer Richtung einen gleichen Abstand zu der Drehachse 51 auf. Die ersten Bohrungen 41 sind bezüglich der Drehachse 51 in Umfangsrichtung versetzt zu den zweiten Bohrungen 42 angeordnet.

In der hier gezeigten ersten Variante der Rolleneinheit 20 ist in den ersten Bohrungen 41 jeweils ein Bolzen 45 aufgenommen. Die zweiten Bohrungen 42 sind frei von Bolzen. Die Bremseinheit weist ein Paar von ersten Bremsbacken 31 auf, welche zur Erzeugung eines ersten Bremsmoments jeweils um einen der Bolzen 45 relativ zu dem Haltekörper 24 schwenkbar gelagert sind.

Die Bremseinheit weist eine Betätigungseinheit auf. Mittels der Betätigungseinheit sind die ersten Bremsbacken 31 zur Erzeugung des ersten Bremsmoments um die Bolzen 45 relativ zu dem Haltekörper 24 derart schwenkbar, dass die ersten Bremsbacken 31 mit der Bremsfläche des Rades 30 in Kontakt kommen. Die Betätigungseinheit umfasst eine Nockenscheibe 53, welche um die Drehachse 51 drehbar ist. Die Nockenscheibe 53 weist zwei radial nach außen ragende Nocken auf. Die Betätigungseinheit umfasst auch einen Betätigungshebel 55, welcher mit der Nockenscheibe 53 verbunden ist. Der Betätigungshebel 55 ist von einem hier nicht dargestellten Aktor ansteuerbar.

Eine Ansteuerung des Betätigungshebels 55 durch den Aktor bewirkt eine Drehung der Nockenscheibe 53 um die Drehachse 51. Bei einer solchen Drehung der Nockenscheibe 53 um die Drehachse 51 verursachen die Nocken die besagte Schwenkung der ersten Bremsbacken 31 um die Bolzen 45, wodurch die ersten Bremsbacken 31 mit der Bremsfläche des Rades 30 in Kontakt kommen. In der hier gezeigten Darstellung ist der Betätigungshebel 55 nicht angesteuert, und die Bremseinheit ist inaktiv.

Die Bremseinheit weist auch eine Rückstelleinheit auf. Die Rückstelleinheit schwenkt die ersten Bremsbacken 31 derart um die Bolzen 45 relativ zu dem Haltekörper 24, dass die ersten Bremsbacken 31 außer Kontakt mit der Bremsfläche des Rades 30 kommen. Die Rückstelleinheit umfasst zwei Rückstellfedern 57, welche vorliegend als Zugfedern ausgestaltet sind. Die Rückstellfedern 57 ziehen die ersten Bremsbacken 31 von der Bremsfläche des Rades 30 weg.

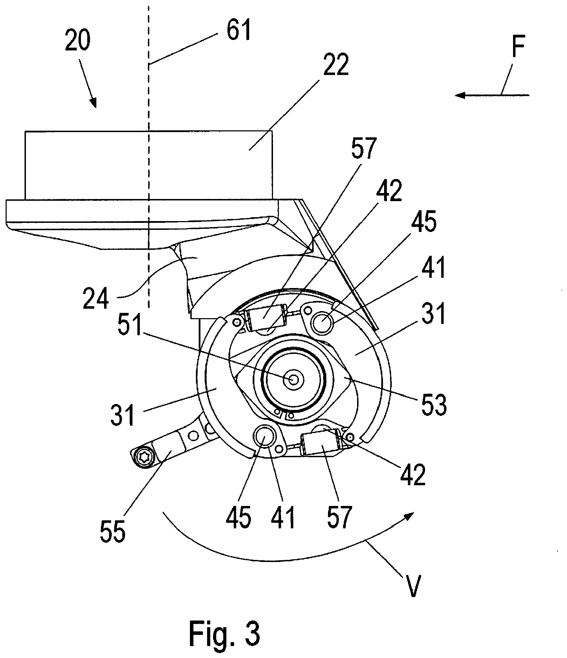

Figur 3 zeigt einen Schnitt durch die Rolleneinheit 20 in der ersten Variante mit aktivierter Bremseinheit. Das Rad 30 ist hier nicht dargestellt. Im Unterschied zur Darstellung in Figur 2 ist der Betätigungshebel 55 angesteuert, die Nockenscheibe 53 ist um die Drehachse 51 gedreht, und die ersten Bremsbacken 31 sind mit der Bremsfläche des Rades 30 in Kontakt. Die Bremseinheit ist somit aktiviert.

Die ersten Bohrungen 41 sind derart angeordnet, dass bei einer Drehung des Rades 30 in die Vorzugsrichtung V und bei in den ersten Bohrungen 41 aufgenommenen Bolzen 45 die ersten Bremsbacken 31 bei Erzeugung des ersten Bremsmoments an der Bremsfläche des Rades 30 auflaufen.

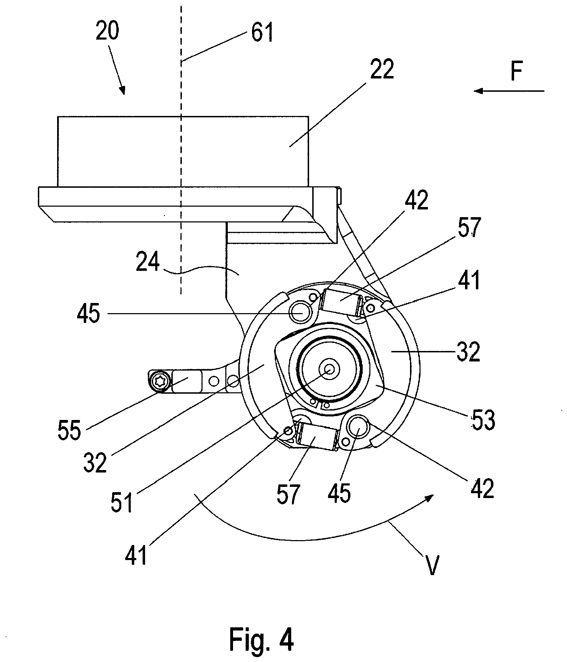

Figur 4 zeigt einen Schnitt durch eine Rolleneinheit 20 in einer zweiten Variante mit inaktiver Bremseinheit. Die Rolleneinheit 20 in der zweiten Variante entspricht weitgehend der Rolleneinheit 20 in der ersten Variante. Im Folgenden wird im Wesentlichen auf die Unterschiede zwischen der ersten Variante und der zweiten Variante eingegangen. Die Rolleneinheit 20 wird in eine Fahrtrichtung F bewegt. Dabei dreht sich das hier nicht dargestellte Rad 30 in eine Vorzugsrichtung V um die Drehachse 51.

Die Rolleneinheit 20 in der zweiten Variante umfasst den gleichen Montagekörper 22, den gleichen Haltekörper 24 und das gleiche Rad 30 wie die Rolleneinheit 20 in der ersten Variante. Der Haltekörper 24 weist dabei die gleichen Bohrungen 41, 42 zur Aufnahme von Bolzen 45 auf. Auch die Bolzen 45 sind gleich. Die Bremseinheit der Rolleneinheit 20 in der zweiten Variante weist ferner die gleiche Betätigungseinheit sowie die gleiche Rückstelleinheit auf wie die Bremseinheit der Rolleneinheit 20 in der ersten Variante.

In der hier gezeigten zweiten Variante der Rolleneinheit 20 ist, abweichend von der Rolleneinheit 20 in der ersten Variante, in den zweiten Bohrungen 42 jeweils ein Bolzen 45 aufgenommen. Die ersten Bohrungen 41 sind frei von Bolzen. Die Bremseinheit weist ein Paar von zweiten Bremsbacken 32 auf, welche zur Erzeugung eines zweiten Bremsmoments jeweils um einen der Bolzen 45 relativ zu dem Haltekörper 24 schwenkbar gelagert sind. Die zweiten Bremsbacken 32 weisen vorliegend eine andere Kontur auf als die ersten Bremsbacken 31.

Eine Ansteuerung des Betätigungshebels 55 durch den hier nicht dargestellten Aktor bewirkt eine Drehung der Nockenscheibe 53 um die Drehachse 51. Bei einer solchen Drehung der Nockenscheibe 53 um die Drehachse 51 verursachen die Nocken eine Schwenkung der zweiten Bremsbacken 32 um die Bolzen 45, wodurch die zweiten Bremsbacken 32 mit der Bremsfläche des Rades 30 in Kontakt kommen. In der hier gezeigten Darstellung ist der Betätigungshebel 55 nicht angesteuert, und die Bremseinheit ist inaktiv.

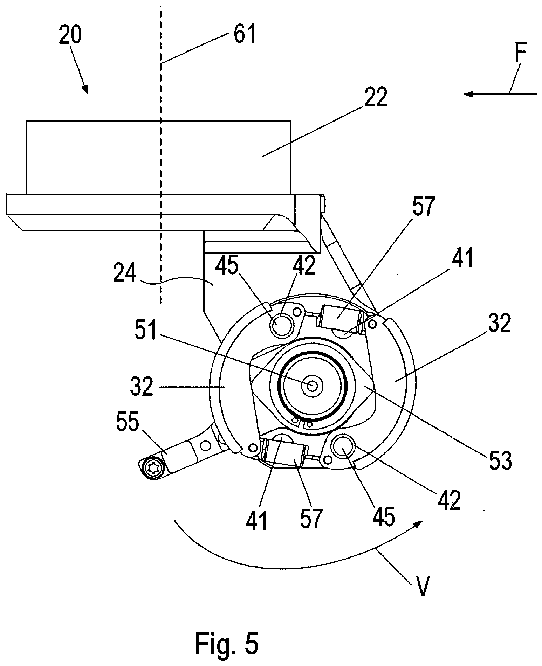

Figur 5 zeigt einen Schnitt durch die Rolleneinheit 20 in der zweiten Variante mit aktivierter Bremseinheit. Das Rad 30 ist hier nicht dargestellt. Im Unterschied zur Darstellung in Figur 4 ist der Betätigungshebel 55 angesteuert, die Nockenscheibe 53 ist um die Drehachse 51 gedreht, und die zweiten Bremsbacken 31 sind mit der Bremsfläche des Rades 30 in Kontakt. Die Bremseinheit ist somit aktiviert.

Die zweiten Bohrungen 42 sind derart angeordnet, dass bei einer Drehung des Rades 30 in die Vorzugsrichtung V und bei in den zweiten Bohrungen 42 aufgenommenen Bolzen 45 die zweiten Bremsbacken 32 bei Erzeugung des zweiten Bremsmoments an der Bremsfläche des Rades 30 ablaufen.

Bei der Rolleneinheit 20 in der ersten Variante laufen die ersten Bremsbacken 31 bei einer Drehung des Rades 30 in die Vorzugsrichtung V beim Bremsen an der Bremsfläche des Rades 30 auf und erzeugen dabei das erste Bremsmoment. Bei der Rolleneinheit 20 in der zweiten Variante laufen die zweiten Bremsbacken 32 bei einer Drehung des Rades 30 in die Vorzugsrichtung V beim Bremsen an der Bremsfläche des Rades 30 ab und erzeugen dabei das zweite Bremsmoment. Das erste Bremsmoment ist dabei, bei gleichartiger Ansteuerung des Betätigungshebels 55 durch den Aktor, größer als das zweite Bremsmoment, beispielsweise doppelt so groß.

Die Rolleneinheit 20 in der zweiten Variante entspricht, wie bereits erwähnt, weitgehend der Rolleneinheit 20 in der ersten Variante. Lediglich sind die Bolzen 45 in den anderen Bohrungen 41, 42 aufgenommen, und die Bremsbacken 31, 32 sind geringfügig unterschiedlich ausgestaltet. Eine Rolleneinheit 20 ist somit mit geringem Aufwand, nämlich lediglich durch Umstecken der Bolzen 45 und durch Austauschen der Bremsbacken 31, 32 von der ersten Variante auf die zweite Variante umrüstbar. Somit ist mit geringen Aufwand das größere erste Bremsmoment oder das kleinere zweite Bremsmoment, je nach Anwendung der Rolleneinheit 20, wählbar.

### Bezugszeichenliste

- 10: Fahrzeug
- 12: Fahrzeugrahmen
- 13: Pendelachse
- 14: Pendelrahmen
- 20: Rolleneinheit
- 22: Montagekörper
- 24: Haltekörper
- 30: Rad
- 31: erster Bremsbacken
- 32: zweiter Bremsbacken
- 41: erste Bohrung
- 42: zweite Bohrung
- 45: Bolzen
- 51: Drehachse
- 53: Nockenscheibe
- 55: Betätigungshebel
- 57: Rückstellfeder
- 61: Schwenkachse
- 70: Antriebseinheit
- 71: Antriebsrad
- 73: Antriebsachse
- 75: Lenkachse

- F: Fahrtrichtung
- S: Seitenrichtung
- T: Grundrichtung
- V: Vorzugsrichtung
- Z: Vertikalrichtung

## Patentansprüche

1. Rolleneinheit (20) für ein Fahrzeug (10), umfassend
einen Haltekörper (24),
mindestens ein um eine Drehachse (51) relativ zu dem Haltekörper (24) drehbares Rad (30) und
mindestens eine Bremseinheit zum Bremsen des mindestens einen Rades (30),
wobei die Bremseinheit
ein Paar von Bremsbacken (31, 32) aufweist, welche zur Erzeugung eines Bremsmoments jeweils um einen Bolzen (45) relativ zu dem Haltekörper (24) schwenkbar sind, wobei
der Haltekörper (24) ein Paar von ersten Bohrungen (41) zur Aufnahme der Bolzen (45) aufweist,
**dadurch gekennzeichnet, dass**
der Haltekörper (24) ein Paar von zweiten Bohrungen (42) zur Aufnahme der Bolzen (45) aufweist.

2. Rolleneinheit (20) nach Anspruch 1,
**dadurch gekennzeichnet, dass**
die ersten Bohrungen (41) und die zweiten Bohrungen (42) derart angeordnet sind, dass bei einer Drehung des mindestens einen Rades (30) in eine Vorzugsrichtung (V)
bei in den ersten Bohrungen (41) aufgenommenen Bolzen (45) mittels der Bremsbacken (31) ein erstes Bremsmoment erzeugbar ist, und
bei in den zweiten Bohrungen (42) aufgenommenen Bolzen (45) mittels der Bremsbacken (32) ein zweites Bremsmoment erzeugbar ist,
wobei das erste Bremsmoment größer ist als das zweite Bremsmoment.

3. Rolleneinheit (20) nach Anspruch 2,
**dadurch gekennzeichnet, dass**
die ersten Bohrungen (41) derart angeordnet sind, dass
bei einer Drehung des mindestens einen Rades (30) in die Vorzugsrichtung (V) bei in den ersten Bohrungen (41) aufgenommenen Bolzen (45)
die Bremsbacken (31) bei Erzeugung des ersten Bremsmoments an einer mit dem Rad (30) drehenden Bremsfläche auflaufen.

4. Rolleneinheit (20) nach einem der Ansprüche 2 bis 3,
**dadurch gekennzeichnet, dass**
die zweiten Bohrungen (42) derart angeordnet sind, dass
bei einer Drehung des mindestens einen Rades (30) in die Vorzugsrichtung (V) bei in den zweiten Bohrungen (42) aufgenommenen Bolzen (45)
die Bremsbacken (32) bei Erzeugung des zweiten Bremsmoments an einer mit dem Rad (30) drehenden Bremsfläche ablaufen.

5. Rolleneinheit (20) nach mindestens einem der vorangegangenen Ansprüche,
**dadurch gekennzeichnet, dass**
die ersten Bohrungen (41) diametral gegenüberliegend bezüglich der Drehachse (51) angeordnet sind, und dass
die zweiten Bohrungen (42) diametral gegenüberliegend bezüglich der Drehachse (51) angeordnet sind.

6. Rolleneinheit (20) nach mindestens einem der vorangegangenen Ansprüche,
**dadurch gekennzeichnet, dass**
die ersten Bohrungen (41) bezüglich der Drehachse (51) in Umfangsrichtung versetzt zu den zweiten Bohrungen (42) angeordnet sind.

7. Rolleneinheit (20) nach mindestens einem der vorangegangenen Ansprüche,
**dadurch gekennzeichnet, dass**
die ersten Bohrungen (41) und die zweiten Bohrungen (42) in radialer Richtung einen gleichen Abstand zu der Drehachse (51) aufweisen.

8. Rolleneinheit (20) nach mindestens einem der vorangegangenen Ansprüche,
**dadurch gekennzeichnet, dass**
die Bremseinheit eine Betätigungseinheit aufweist, mittels welcher die Bremsbacken (31, 32) zur Erzeugung eines Bremsmoments um die Bolzen (45) relativ zu dem Haltekörper (24) derart schwenkbar sind, dass die Bremsbacken (31, 32) mit einer mit dem Rad (30) drehenden Bremsfläche in Kontakt kommen.

9. Rolleneinheit (20) nach Anspruch 8,
**dadurch gekennzeichnet, dass**
die Betätigungseinheit eine Nockenscheibe (53) umfasst, welche um die Drehachse (51) drehbar ist, und welche zwei radial nach außen ragende Nocken aufweist.

10. Rolleneinheit (20) nach mindestens einem der vorangegangenen Ansprüche,
**dadurch gekennzeichnet, dass**
die Bremseinheit eine Rückstelleinheit aufweist, welche die Bremsbacken (31, 32) derart um die Bolzen (45) relativ zu dem Haltekörper (24) schwenkt, dass die Bremsbacken (31, 32) außer Kontakt mit der mit dem Rad (30) drehenden Bremsfläche kommen.

11. Rolleneinheit (20) nach Anspruch 10,
**dadurch gekennzeichnet, dass**
die Rückstelleinheit zwei Rückstellfedern (57) umfasst, welche als Zugfedern ausgestaltet sind.

12. Rolleneinheit (20) nach mindestens einem der vorangegangenen Ansprüche,
**dadurch gekennzeichnet, dass**
die Rolleneinheit (20) einen Montagekörper (22) aufweist, welcher um eine Schwenkachse (61) relativ zu dem Haltekörper (24) schwenkbar ist.

13. Fahrzeug (10), insbesondere autonom fahrendes Fahrzeug, umfassend
einen Fahrzeugrahmen (12) und
mindestens eine Rolleneinheit (20) nach einem der vorangegangenen Ansprüche.

14. Fahrzeug (10) nach Anspruch 13,
**dadurch gekennzeichnet, dass**
die mindestens eine Rolleneinheit (20) derart an dem Fahrzeugrahmen (12) angeordnet ist, dass
der Haltekörper (24) um eine in Vertikalrichtung (Z) verlaufende Schwenkachse (61) relativ zu dem Fahrzeugrahmen (12) schwenkbar ist.

## Claims

1. A roller unit (20) for a vehicle (10), comprising
a holding body (24),
at least one wheel (30), rotatable relative to the holding body (24) about a rotational axis (51) and
at least one brake unit for braking the at least one wheel (30),
wherein the brake unit has a pair of brake shoes (31, 32) which are in each case pivotable relative to the holding body (24) about a pin (45) in order to generate a braking torque, wherein
the holding body (24) has a pair of first bores (41) for receiving the pins (45),
**characterised in that**
the holding body (24) has a pair of second bores (42) for receiving the pins (45).

2. A roller unit (20) according to claim 1,
**characterised in that**
the first bores (41) and the second bores (42) are arranged in such a manner that, in the event of a rotation of the at least one wheel (30) in a preferred direction (V), in the case of pins (45) received in the first bores (41) there can be generated a first braking torque by means of the brake shoes (31) and in the case of pins (45) received in the second bores (42) there can be generated a second braking torque by means of the brake shoes (32), wherein the first braking torque is greater than the second braking torque.

3. A roller unit (20) according to claim 2,
**characterised in that**
the first bores (41) are arranged in such a manner that upon rotation of the at least one wheel (30) in the preferred direction (V), the brake shoes (31) are leading upon generation of the first braking torque at a braking surface, rotating with the wheel (30), in the case of pins (45) received in the first bores (41).

4. A roller unit (20) according to one of claims 2 to 3,
**characterised in that**
the second bores (42) are arranged in such a manner that upon rotation of the at least one wheel (30) in the preferred direction (V), the brake shoes (32) are trailing upon generation of the second braking torque at a braking surface, rotating with the wheel (30), in the case of pins (45) received in the second bores (42).

5. A roller unit (20) according to at least one of the preceding claims,
**characterised in that**
the first bores (41) are arranged diametrically opposite with respect to the rotational axis (51), and **in that** the second bores (42) are arranged diametrically opposite with respect to the rotational axis (51).

6. A roller unit (20) according to at least one of the preceding claims,
**characterised in that**
the first bores (41) are in a circumferential direction arranged offset from the second bores (42) with respect to the rotational axis (51).

7. A roller unit (20) according to at least one of the preceding claims,
**characterised in that**
the first bores (41) and the second bores (42) are at the same distance from the rotational axis (51) in a radial direction.

8. A roller unit (20) according to at least one of the preceding claims,
**characterised in that**
the brake unit has an actuating unit by means of which the brake shoes (31, 32) are for generation of a braking torque pivotable relative to the holding body (24) about the pins (45) in such a manner that the brake shoes (31, 32) come into contact with a braking surface rotating with the wheel (30).

9. A roller unit (20) according to claim 8,
**characterised in that**
the actuating unit comprises a cam disc (53) which is rotatable about the rotational axis (51) and which has two cams projecting radially outwards.

10. A roller unit (20) according to at least one of the preceding claims,
**characterised in that**
the brake unit has a restoring unit which pivots the brake shoes (31, 32) about the pins (45) relative to the holding body (24) in such a manner that the brake shoes (31, 32) come out of contact with the braking surface rotating with the wheel (30).

11. A roller unit (20) according to claim 10,
**characterised in that**
the restoring unit comprises two restoring springs (57) in the form of tension springs.

12. A roller unit (20) according to at least one of the preceding claims,
**characterised in that**
the roller unit (20) has a mounting body (22) pivotable relative to the holding body (24) about a pivot axis (61).

13. A vehicle (10), in particular a self-driving vehicle, comprising
a vehicle frame (12) and
at least one roller unit (20) according to any one of the preceding claims.

14. A vehicle (10) according to claim 13,
**characterised in that**
the at least one roller unit (20) is arranged on the vehicle frame (12) in such a manner that the holding body (24) is pivotable relative to the vehicle frame (12) about a pivot axis (61) running in a vertical direction (Z).

## Revendications

1. Unité de roulement (20) destinée à un véhicule (10), comprenant
un corps de maintien (24),
au moins une roue (30) apte à tourner par rapport au corps de maintien (24), autour d'un axe de rotation (51), et
au moins une unité de freinage conçue pour freiner ladite roue (30) à présence minimale, laquelle unité de freinage
comporte une paire de mâchoires de freinage (31, 32) aptes à pivoter par rapport audit corps de maintien (24), autour d'un tourillon (45) respectif, en vue d'engendrer un couple de freinage, sachant que
ledit corps de maintien (24) est muni d'une paire de premiers alésages (41) dévolus à la réception des tourillons (45),
**caractérisée par le fait que**
le corps de maintien (24) est pourvu d'une paire de seconds alésages (42) affectés à la réception des tourillons (45).

2. Unité de roulement (20) selon la revendication 1,
**caractérisée par le fait que**
les premiers alésages (41) et les seconds alésages (42) occupent des emplacements tels que,
lors d'une rotation de la roue (30) à présence minimale, dans une direction préférentielle (V),
un premier couple de freinage puisse être engendré au moyen des mâchoires de freinage (31) lorsque les tourillons (45) sont logés dans lesdits premiers alésages (41), et
un second couple de freinage puisse être engendré au moyen des mâchoires de freinage (32) lorsque lesdits tourillons (45) sont logés dans lesdits seconds alésages (42),
le premier couple de freinage étant supérieur au second couple de freinage.

3. Unité de roulement (20) selon la revendication 2,
**caractérisée par le fait que**
les premiers alésages (41) occupent des emplacements tels que,
lors d'une rotation de la roue (30) à présence minimale, dans la direction préférentielle (V),
les tourillons (45) étant logés dans lesdits premiers alésages (41),
les mâchoires de freinage (31) effectuent un mouvement ascendant, lorsque le premier couple de freinage est engendré, sur une surface de freinage qui tourne avec ladite roue (30).

4. Unité de roulement (20) selon l'une des revendications 2 à 3,
**caractérisée par le fait que**
les seconds alésages (42) occupent des emplacements tels que,
lors d'une rotation de la roue (30) à présence minimale, dans la direction préférentielle (V),
les tourillons (45) étant logés dans lesdits seconds alésages (42),
les mâchoires de freinage (32) exécutent un mouvement descendant, lorsque le second couple de freinage est engendré, sur une surface de freinage qui tourne avec ladite roue (30).

5. Unité de roulement (20) selon au moins l'une des revendications précédentes,
**caractérisée par le fait que**
les premiers alésages (41) occupent des emplacements diamétralement opposés par rapport à l'axe de rotation (51) ; et **par le fait que**
les seconds alésages (42) occupent des emplacements diamétralement opposés par rapport audit axe de rotation (51).

6. Unité de roulement (20) selon au moins l'une des revendications précédentes,
**caractérisée par le fait que**
les premiers alésages (41) occupent, par rapport à l'axe de rotation (51), des emplacements décalés vis-à-vis des seconds alésages (42) dans la direction du pourtour.

7. Unité de roulement (20) selon au moins l'une des revendications précédentes,
**caractérisée par le fait que**
les premiers alésages (41) et les seconds alésages (42) présentent, dans la direction radiale, une distance identique par rapport à l'axe de rotation (51).

8. Unité de roulement (20) selon au moins l'une des revendications précédentes,
**caractérisée par le fait que**
l'unité de freinage est équipée d'une unité d'actionnement au moyen de laquelle les mâchoires de freinage (31, 32) peuvent pivoter par rapport au corps de maintien (24), autour des tourillons (45), en vue d'engendrer un couple de freinage, de façon telle que lesdites mâchoires de freinage (31, 32) entrent en contact avec une surface de freinage qui tourne avec la roue (30).

9. Unité de roulement (20) selon la revendication 8,
**caractérisée par le fait que**
l'unité d'actionnement inclut un disque (53) à cames, apte à tourner autour de l'axe de rotation (51) et comprenant deux cames qui font radialement saillie vers l'extérieur.

10. Unité de roulement (20) selon au moins l'une des revendications précédentes,
**caractérisée par le fait que**
l'unité de freinage est dotée d'une unité de rappel imprimant des pivotements aux mâchoires de freinage (31, 32) par rapport au corps de maintien (24), autour des tourillons (45), de façon telle que lesdites mâchoires de freinage (31, 32) se libèrent de leur contact avec la surface de freinage qui tourne avec la roue (30).

11. Unité de roulement (20) selon la revendication 10,
**caractérisée par le fait que**
l'unité de rappel inclut deux ressorts de rappel (57) conçus comme des ressorts de traction.

12. Unité de roulement (20) selon au moins l'une des revendications précédentes,
**caractérisée par le fait que**
ladite unité de roulement (20) est pourvue d'un corps de montage (22) apte à pivoter, par rapport au corps de maintien (24), autour d'un axe de pivotement (61).

13. Véhicule (10), notamment véhicule à déplacement autonome, comprenant un châssis (12) et
au moins une unité de roulement (20) conforme à l'une des revendications précédentes.

14. Véhicule (10) selon la revendication 13,
**caractérisé par le fait que**
l'unité de roulement (20) à présence minimale occupe, sur le châssis (12) dudit véhicule, un emplacement tel que
le corps de maintien (24) puisse pivoter, par rapport audit châssis (12) du véhicule, autour d'un axe de pivotement (61) s'étendant dans la direction verticale (Z).
